# EUROPÄISCHE PATENTSCHRIFT

(11) **EP 4 098 528 B1**
(45) Veröffentlichungstag und Bekanntmachung des Hinweises auf die Patenterteilung: **16.04.2025**
(21) Anmeldenummer: 22174559.9
(22) Anmeldetag: 20.05.2022
(51) Int. Cl.: B62H 5/14

(54) **RAHMENSCHLOSS**
FRAME LOCK
SERRURE EN CHÂSSIS

(30) Priorität: 01.06.2021 DE 102021114206
(43) Veröffentlichungstag der Anmeldung: 07.12.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- DE-A1- 102018 121 248

## Beschreibung

Die Erfindung betrifft ein Rahmenschloss für ein Zweirad.

Von mobilen Zweiradschlössern unterscheiden sich Rahmenschlösser typischerweise dadurch, dass sie fest und in der Regel dauerhaft mit dem Rahmen des Zweirads verbunden, beispielsweise an dem Rahmen angeschraubt, sind. Das Rahmenschloss wird dabei derart angeordnet, dass ein Bügel des Rahmenschlosses wahlweise in eine Stellung verstellt werden kann, in der er zwischen die Speichen eines Rades des Zweirads eingreift, um ein Fahren mit dem Zweirad auf diese Weise zu verhindern. In dieser Stellung wird der Bügel zweckmäßigerweise durch einen Riegel des Rahmenschlosses gesichert, der sich zumindest idealerweise ausschließlich über einen Schließzylinder oder eine sonstige Schließeinrichtung des Rahmenschlosses verstellen lässt, zu deren Betätigung ein Nutzer über ein Schließgeheimnis, wie etwa einen Schlüssel, verfügen muss. Typische Bauformen für den Bügel sind einerseits eine Ausbildung als Schwenkbügel mit geradem Verlauf und andererseits eine Ausbildung als Drehbügel mit kreisbogenförmigem Verlauf. Ein gattungsgemässes Rahmenschloss mit einem Drehbügel ist beispielsweise aus DE 10 2018 121 248 A1 bekannt.

Insbesondere kann ein Rahmenschloss einen Schlosskörper mit einem Riegel sowie einen Drehbügel umfassen, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist, wobei der Drehbügel eine Sperrstruktur mit einem Anschlagabschnitt aufweist, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Für die Zuverlässigkeit des Rahmenschlosses ist die Stabilität des Drehbügels ein entscheidender Faktor. Damit das Rahmenschloss möglichst nicht aufgebrochen werden kann, muss der Drehbügel besonders fest sein. Zugleich wird angestrebt, den Drehbügel möglichst kostengünstig und möglichst weitgehend automatisiert herstellen zu können.

Ein Drehbügel für ein Rahmenschloss kann beispielsweise aus einem Stangenmaterial, insbesondere einem Metalldraht, hergestellt werden, das in eine Kreisbogenform gebogen wird. Um die genannte Sperrstruktur mit dem Anschlagabschnitt auszubilden, kann in dieses Stangenmaterial durch spanende Bearbeitung eine Aussparung eingebracht, zum Beispiel ausgestanzt oder ausgefräst, werden. Eine Seitenwand dieser Aussparung kann dabei den Anschlagabschnitt bilden. Die spanende Bearbeitung hat aber den Nachteil, dass das bearbeitete Material dadurch geschwächt wird, da Fasern, die das Stangenmaterial längs durchziehen, unterbrochen werden. Insbesondere kann infolgedessen bei einem anschließenden Härten des Drehbügels ein Verzug entstehen, der bei einem nachfolgenden Richten sogar zu einem Bruch führen kann.

Es ist eine Aufgabe der Erfindung, ein Rahmenschloss für ein Zweirad mit einem Drehbügel oder einen Drehbügel für ein solches Rahmenschloss bereitzustellen, der möglichst einfach, kostengünstig und automatisiert herstellbar ist, dabei eine besonders stabile Struktur aufweist und dazu geeignet ist, das Zweirad besonders zuverlässig zu sichern.

Die Aufgabe wird gelöst durch ein Rahmenschloss mit den Merkmalen des Anspruchs 1. Vorteilhafte Ausführungsformen ergeben sich aus den abhängigen Ansprüchen, der vorliegenden Beschreibung sowie den Figuren.

Das erfindungsgemäße Rahmenschloss für ein Zweirad umfasst einen Schlosskörper mit einem Riegel sowie einen Drehbügel, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist.

Der Drehbügel ist vorzugsweise aus einem Stangenmaterial gebildet, insbesondere einem Metalldraht, wie etwa Stahldraht, wobei das Stangenmaterial bevorzugt einen konstanten Querschnitt aufweist. Der Durchmesser der Kreisbahn kann z.B. im Bereich zwischen 10 cm und 15 cm liegen, beispielsweise etwa 13 cm betragen. Im Querschnitt kann der Drehbügel einen Durchmesser in der Größenordnung von einigen Millimetern bis wenigen Zentimetern aufweisen. Beispielsweise kann der Durchmesser des Querschnitts zumindest im Mittel etwa 8 oder 9 mm betragen. Durch die Erstreckung längs der Kreisbahn weist der Drehbügel eine Kreisbogenform auf, die sich über einen bestimmten Teilbereich der kreisförmig geschlossenen Kreisbahn erstreckt, beispielsweise über einen Winkelbereich von mindestens 200° und/oder höchstens 250°, vorzugsweise von mindestens 210° und/oder höchstens 240°, insbesondere von etwa 225° oder 230°.

Da der Drehbügel zwischen der Offenstellung und der Geschlossenstellung verstellbar ist, kann der Drehbügel aus der Offenstellung in eine Schließrichtung bis in die Geschlossenstellung und umgekehrt aus der Geschlossenstellung in eine zu der Schließrichtung entgegengesetzte Öffnungsrichtung bis in die Offenstellung verstellt werden. Dadurch wird jedoch nicht ausgeschlossen, dass der Drehbügel noch in anderer Weise, insbesondere in Schließrichtung über die Geschlossenstellung hinaus und/oder in Öffnungsrichtung über die Offenstellung hinaus, verstellbar kann.

Bei einem Verstellen des Drehbügels entlang der Kreisbahn wird der Drehbügel mit seiner gebogenen Längserstreckung entlang der Kreisbahn verschoben, so dass er die Kreisbahn nicht verlässt, sondern sich nur über einen - hinsichtlich seiner Lage, jedoch nicht hinsichtlich seiner Winkelausdehnung - veränderten Teilbereich der Kreisbahn erstreckt. Das Verstellen des Drehbügels entspricht dabei einem Drehen des Drehbügels um eine Drehachse, die durch den Mittelpunkt der Kreisbahn verläuft und zu einer Ebene, in der die Kreisbahn liegt, senkrecht ausgerichtet ist.

Bei der Verstellbarkeit des Drehbügels entlang der Kreisbahn handelt es sich um eine grundsätzliche Verstellbarkeit, die sich insbesondere aus einer entsprechenden Lagerung des Drehbügels an dem Schlosskörper ergeben kann. Die Verstellbarkeit muss aber nicht permanent vorliegen, sondern kann durch den genannten Riegel blockiert sein, insbesondere um den Drehbügel mittels des Riegels in einer oder mehreren verschiedenen bestimmten Stellungen sichern zu können. Vorzugsweise ist der Drehbügel zumindest aus der Offenstellung bis in die Geschlossenstellung sowie aus der Geschlossenstellung bis in die Offenstellung verstellbar, wenn weder der Riegel noch irgendein Hindernis in der Bewegungsbahn (zum Beispiel eine Speiche des Rades des Zweirads) ein Verstellen blockieren.

Die Kreisbahn kann teilweise durch den Schlosskörper des Rahmenschlosses verlaufen, so dass sich der Drehbügel teilweise in oder durch den Schlosskörper erstrecken kann und dabei innerhalb des Schlosskörpers mit dem Riegel zusammenwirken kann. Vorzugsweise ist der Riegel dabei vollständig innerhalb eines Gehäuses des Schlosskörpers angeordnet, um von außen möglichst unzugänglich zu sein. Ferner kann der Drehbügel teilweise in dem Gehäuse des Schlosskörpers aufgenommen sein. Der Drehbügel kann insbesondere an diesem Gehäuse gelagert sein.

In der Geschlossenstellung erstreckt sich der Drehbügel vorzugsweise aus dem Schlosskörper, insbesondere aus dem genannten Gehäuse des Schlosskörpers, heraus und anschließend zumindest mit einem freien Ende wieder in den Schlosskörper, insbesondere in das Gehäuse, hinein, so dass der Schlosskörper und der Drehbügel in der Geschlossenstellung vorzugsweise einen geschlossenen Ring bilden. Auf diese Weise kann das jeweilige Rad besonders zuverlässig gegen Drehung gesperrt werden. In der Offenstellung erstreckt sich der Drehbügel dagegen aus dem Schlosskörper hinaus, jedoch nicht wieder in diesen hinein oder ist zumindest nahezu vollständig in dem Schlosskörper, insbesondere in dem Gehäuse, aufgenommen.

Selbstverständlich kann der Drehbügel in seiner Geschlossenstellung das Rad eines jeweiligen Zweirads nur dann gegen Drehung sperren, wenn das Rahmenschloss in geeigneter Weise an dem Zweirad montiert ist. Mit anderen Worten: Das Rahmenschloss ist dazu ausgebildet, derart an dem Zweirad angeordnet zu werden, dass der Drehbügel in seiner Geschlossenstellung ein Rad des Zweirads gegen Drehung sperrt (insbesondere indem er das Rad durchgreift) und in seiner Offenstellung das Rad für eine Drehung freigibt.

Erfindungsgemäß weist der Drehbügel eine Sperrstruktur mit einem Anschlagabschnitt auf, wobei der Riegel zwischen einer Entriegelungsstellung und einer Verriegelungsstellung verstellbar ist, und wobei der Riegel, wenn sich der Drehbügel in seiner Geschlossenstellung befindet und sich der Riegel in seiner Verriegelungsstellung befindet, den Anschlagabschnitt hintergreift und den Drehbügel dadurch gegen ein Verstellen in die Offenstellung sperrt.

Der Riegel kann insbesondere relativ zu dem genannten Gehäuse des Schlosskörpers zwischen der Entriegelungsstellung und der Verriegelungsstellung verstellbar sein. Bei dem Verstellen kann es sich beispielsweise um ein lineares Versetzen handeln. Vorzugsweise lässt sich der Riegel nur über eine an dem Schlosskörper, insbesondere in dem Schlosskörper, vorgesehene Schließeinrichtung, bevorzugt in Form eines Schließzylinders, verstellen, mit der er, z.B. über einen Mitnehmer, gekoppelt ist und die nur mittels eines ihr zugeordneten Schlüssels betätigbar ist.

Auch bei der Verstellbarkeit des Riegels handelt es sich um eine grundsätzliche Verstellbarkeit, die nicht permanent vorliegen muss, sondern insbesondere von der jeweiligen Stellung des Drehbügels abhängen kann. Vorzugsweise ist der Riegel jedenfalls dann aus der Entriegelungsstellung bis in die Verriegelungsstellung und umgekehrt aus der Verriegelungsstellung bis in die Entriegelungsstellung verstellbar, wenn sich der Drehbügel in seiner Geschlossenstellung befindet. Außerdem kann der Riegel insbesondere auch dann aus der Entriegelungsstellung bis in die Verriegelungsstellung und umgekehrt aus der Verriegelungsstellung bis in die Entriegelungsstellung verstellbar sein, wenn sich der Drehbügel in seiner Offenstellung befindet.

Somit kann der Drehbügel in seiner Geschlossenstellung durch den Riegel gesichert werden, indem der Riegel in seine Verriegelungsstellung verstellt wird und dann den Anschlagabschnitt der Sperrstruktur des Drehbügels hintergreift. Die Sperrung gegen ein Verstellen des Drehbügels entlang der Kreisbahn ist besonders zuverlässig, wenn der Anschlagabschnitt zumindest im Wesentlichen senkrecht zu der zu sperrenden Bewegungsrichtung, also zum Verlauf der Kreisbahn, des Drehbügels ausgerichtet ist, was daher bevorzugt ist.

Der Anschlagabschnitt ist vorzugsweise, jedoch nicht notwendigerweise, als Anschlagfläche, also flächig ausgebildet. Grundsätzlich kann der Anschlagabschnitt auch durch eine Kante oder eine Kontur der Sperrstruktur gebildet werden.

Die Sperrstruktur kann auf viele verschiedene Weisen ausgebildet sein. Eine grundsätzlich denkbare, jedoch nicht beanspruchte Weise besteht darin, dass die Sperrstruktur einen Einschnitt oder eine Aussparung in dem Drehbügel umfasst, wobei sich der Einschnitt oder die Aussparung bezüglich des Mittelpunkts der Kreisbahn insbesondere radial von außen nach innen in den Drehbügel hinein erstrecken kann. Der Anschlagabschnitt kann dabei als eine Seitenwand eines solchen Einschnitts oder einer solchen Aussparung ausgebildet sein.

Die Sperrstruktur kann mehrere Anschlagabschnitte aufweisen, die jeweils von dem Riegel hintergriffen werden können, um verschiedene Stellungen des Drehbügels gegen ein Verlassen der jeweiligen Stellung in zumindest eine Verstellrichtung zu sichern. Dabei können mehrere der Anschlagabschnitte dem Sichern derselben Stellung dienen, sei es bezüglich derselben Verstellrichtung oder zueinander entgegengesetzter Verstellrichtungen.

Das genannte Hintergreifen des Anschlagabschnitts durch den Riegel ist auf das zu sperrende Verstellen des Drehbügels bezogen zu verstehen. Insbesondere greift der Riegel dabei quer zum Verlauf der Kreisbahn in eine Bewegungsbahn des Anschlagabschnitts ein, die der Anschlagabschnitt durchlaufen würde, wenn sich der Riegel in seiner Entriegelungsstellung befände und der Drehbügel in die zu sperrende Verstellrichtung entlang der Kreisbahn verstellt würde.

Wenn sich der Drehbügel in seiner Geschlossenstellung befindet und sich der Riegel in seiner Verriegelungsstellung befindet, liegt der Riegel vorzugsweise an dem Anschlagabschnitt an oder weist zumindest einen nur geringen Abstand, beispielsweise von weniger als 1 mm, insbesondere von wenigen hundert Mikrometern, von dem Anschlagabschnitt auf. Dadurch wird der Drehbügel vorteilhafterweise dagegen gesperrt, die Geschlossenstellung überhaupt in Richtung der Offenstellung zu verlassen. Grundsätzlich kann der Riegel aber auch einen größeren Abstand von dem Anschlagabschnitt aufweisen, so dass der Drehbügel zwar um eine diesem Abstand entsprechende Strecke aus der Geschlossenstellung verstellt werden kann, aber jedenfalls dagegen gesperrt wird, eine Stellung zu erreichen, in welcher der Drehbügel das Rad nicht länger zuverlässig gegen eine Drehung sperren würde.

Bei dem Rahmenschloss ist ferner vorgesehen, dass die Sperrstruktur zumindest einen von dem Drehbügel, insbesondere quer zur Längserstreckung des Drehbügels, vorstehenden Steg umfasst, der den Anschlagabschnitt aufweist.

Es muss dabei nicht der gesamte Steg von dem Drehbügel vorstehen, sondern es genügt, wenn der Steg teilweise von dem Drehbügel vorsteht. Ein Teil des Stegs kann sich auch, insbesondere quer zur Längserstreckung des Drehbügels, in den Drehbügel hinein erstrecken. Der von dem Drehbügel vorstehende Teil des Stegs kann insbesondere eine relativ zu seiner Umgebung konvexe Struktur darstellen.

Der Steg kann beispielsweise relativ zu dem Querschnitt eines angrenzenden Abschnitts des Drehbügels vorstehen, insbesondere relativ zu dem Querschnitt eines Stangenmaterials, aus dem der Drehbügel gebildet ist, bevor daran die Sperrstruktur oder zumindest der Steg ausgebildet wurde. Dass der Steg über einen Querschnitt vorsteht, meint dabei insbesondere, dass sich der Steg - entlang der Erstreckung des Drehbügels längs der Kreisbahn betrachtet - über eine Außenkontur des Querschnitts hinaus erstreckt.

Die Richtung, in die der Steg vorsteht, ist vorzugsweise senkrecht zur Längserstreckung des Drehbügels. Insbesondere kann die Richtung zumindest im Wesentlichen radial bezüglich des Mittelpunkts eines zur Längserstreckung des Drehbügels senkrechten Querschnitts des Drehbügels sein.

Der Anschlagabschnitt kann beispielsweise durch eine Stirnseite des Stegs gebildet werden. Insbesondere kann dabei auch der Anschlagabschnitt ganz oder zumindest teilweise von dem Drehbügel vorstehen.

Der Steg stellt somit einen Teil der Sperrstruktur dar, mit welcher der Riegel zusammenwirkt, um den Drehbügel gegen ein Verstellen aus einer jeweiligen Stellung zu sperren. Hierzu ist der Steg vorteilhafterweise an entsprechender Position an dem Drehbügel ausgebildet. Mit anderen Worten ist der Steg dazu ausgebildet (insbesondere derart angeordnet), dass der Riegel den Anschlagabschnitt des Stegs hintergreift, wenn sich der Drehbügel in seiner Geschlossenstellung befindet und sich der Riegel in seiner Verriegelungsstellung befindet.

Der Steg, insbesondere die gesamte Sperrstruktur, ist vorzugsweise innerhalb eines Abschnitts der Längserstreckung des Drehbügels, d.h. der Erstreckung des Drehbügels längs der Kreisbahn, angeordnet, der sowohl in der Geschlossenstellung als auch in der Offenstellung des Drehbügels (sowie in jeder Stellung dazwischen) innerhalb des Schlosskörpers, insbesondere eines Gehäuses des Schlosskörpers, angeordnet und somit vorteilhafterweise von außen nicht zugänglich ist.

Gemäß einer bevorzugten Ausführungsform ist der Anschlagabschnitt, vorzugsweise der gesamte Steg, durch Kaltumformung ausgebildet. Insbesondere kann der Steg dadurch ausgebildet sein, dass mittels eines Stempels, der gegen ein Auflager bewegt wird, ein dazwischen angeordneter Abschnitt des Drehbügels gepresst wird, so dass dieser Abschnitt parallel zur Pressrichtung zusammengedrückt und quer dazu gestreckt wird. Der so verformte Abschnitt steht dadurch teilweise von dem übrigen Drehbügel vor. Das genannte Kaltumformen kann insofern nach Art eines Fließpressens, insbesondere eines Querfließpressens, oder zumindest in dazu ähnlicher Weise erfolgen. Vorzugsweise ist die gesamte Sperrstruktur durch eine nicht-spanende Bearbeitung des Drehbügels ausgebildet. Insbesondere kann der gesamte Drehbügel, gegebenenfalls mit Ausnahme von Endabschnitten an den beiden Enden der Längserstreckung des Drehbügels, ausschließlich in nicht-spanender Weise bearbeitet sein.

Beispielsweise kann durch Kaltumformung eine Ausnehmung in dem Drehbügel ausgebildet werden. Der Anschlagabschnitt kann dann durch eine Seitenwand der Ausnehmung gebildet werden, welche die Ausnehmung in eine Richtung entlang der Kreisbahn begrenzt.

Die Kaltumformung bietet gegenüber einer spanenden Bearbeitung des Drehbügels den Vorteil, dass die Materialstruktur des bearbeiteten Materials durch die Bearbeitung weniger stark beeinträchtigt wird. Insbesondere kann durch eine Kaltumformung vermieden werden, dass für die Stabilität der Materialstruktur wichtige Fasern, insbesondere entlang der Längserstreckung des Drehbügels verlaufende Hauptfasern der Materialstruktur, unterbrochen werden.

Gemäß einer Ausführungsform des erfindungsgemäßen Rahmenschlosses bzw. Drehbügels, bei dem die Sperrstruktur zumindest einen von dem Drehbügel vorstehenden Steg umfasst, der den Anschlagabschnitt aufweist, kann der Drehbügel aus einem Stangenmaterial gebildet sein, das einen konstanten, insbesondere kreisrunden, Querschnitt aufweist, wobei der Steg über diesen Querschnitt, insbesondere über eine Außenkontur dieses Querschnitts, hinaus nach außen vorsteht. Der Steg steht dabei also insofern von dem Drehbügel vor, als er sich, insbesondere bezüglich eines Mittelpunkts des Querschnitts des Drehbügels, in eine bestimmte Richtung weiter nach außen erstreckt als (von einer Biegung in die Kreisbogenform abgesehen) unbearbeitete Abschnitte des Stangenmaterials, aus dem der Drehbügel gebildet ist.

Der Drehbügel kann einen Blockierabschnitt mit konstantem, insbesondere kreisrundem, Querschnitt umfassen, der sich entlang eines Teils der Längserstreckung des Drehbügels erstreckt und dazu ausgebildet ist, in der Geschlossenstellung des Drehbügels in das Rad, nämlich insbesondere zwischen die Speichen des Rades, einzugreifen und es dadurch gegen Drehung zu sperren. Hierzu ist der Blockierabschnitt in der Geschlossenstellung des Drehbügels vorzugsweise vollständig außerhalb eines Gehäuses des Schlosskörpers des Rahmenschlosses angeordnet. Der Steg kann dabei insofern von dem Drehbügel vorstehen, als er über den Querschnitt des Blockierabschnitts, insbesondere über eine Außenkontur dieses Querschnitts, hinaus nach außen vorsteht. Da der Steg außerhalb des Blockierabschnitts ausgebildet ist, muss hierzu der konstante Querschnitt des Blockierabschnitts gedanklich entlang der Kreisbahn bis zum Steg fortgesetzt werden.

Gemäß einer vorteilhaften Ausführungsform umfasst der Drehbügel bezüglich seiner Erstreckung längs der Kreisbahn zumindest zwei auf entgegengesetzten Seiten des Stegs liegende Abschnitte ohne Steg, die den gleichen konstanten, insbesondere kreisrunden, Querschnitt aufweisen, wobei der Steg über diesen Querschnitt, insbesondere über eine Außenkontur dieses Querschnitts, hinaus nach außen vorsteht. Der Steg ist also zwischen zwei stegfreien Abschnitten mit identischem Querschnitt angeordnet und der Steg steht insofern von dem Drehbügel vor, als er sich, insbesondere bezüglich eines Mittelpunkts des Querschnitts des Drehbügels, in eine bestimmte Richtung weiter nach außen erstreckt als diese beiden stegfreien Abschnitte.

Dabei kann der Drehbügel noch weitere Abschnitte mit demselben Querschnitt aufweisen. Insbesondere können alle Abschnitte, die entlang der Kreisbahn zwischen zwei von dem Drehbügel vorstehenden Stegen liegen, vorzugsweise alle stegfreien Abschnitte des Drehbügels (gegebenenfalls mit Ausnahme von Endabschnitten an den beiden Enden der Längserstreckung des Drehbügels) den gleichen Querschnitt aufweisen.

Wenn von einem Querschnitt des Drehbügels die Rede ist, so ist jeweils, sofern nicht anders angegeben, ein zur Längserstreckung des Drehbügels senkrechter Querschnitt gemeint, dessen Schnittebene aufgrund des kreisbogenförmigen Verlaufs der Längserstreckung zumindest im Wesentlichen radial zum Mittelpunkt der Kreisbahn ausgerichtet ist.

Gemäß einer vorteilhaften Ausführungsform weist der Steg zwei zueinander entgegengesetzte parallele Seitenflächen auf, die sich zumindest im Wesentlichen längs der Kreisbahn erstrecken, wobei der Anschlagabschnitt durch eine Stirnseite des Stegs gebildet wird, welche die Seitenflächen verbindet und zumindest im Wesentlichen senkrecht zur Kreisbahn ausgerichtet ist. Die beiden Seitenflächen sind dabei vorzugsweise zu derjenigen Richtung parallel ausgerichtet, in die der Steg von dem Drehbügel vorsteht. Dabei können sich die Stege längs der Kreisbahn erstrecken. Je nachdem, in welche Richtung der Steg von dem Drehbügel vorsteht, können die Seitenflächen daher einen entsprechend der Kreisbahn gebogenen Verlauf aufweisen. Insbesondere eher kurze Stege können aber auch einen zur Kreisbahn tangentialen, geraden Verlauf aufweisen.

Quer zum Verlauf der Kreisbahn sowie zur Richtung des Vorstehens können die Seitenflächen, jedenfalls soweit sie von dem Drehbügel vorstehen, durch jeweilige Ränder oder Randseiten des Stegs miteinander verbunden sein. Die Randseiten können dabei auch die genannte Stirnseite umfassen, durch die der Anschlagabschnitt gebildet wird. Vorzugsweise sind die Randseiten zumindest im Wesentlichen senkrecht zu den Seitenflächen ausgerichtet. Das gilt insbesondere auch für die Stirnseite, durch die der Anschlagabschnitt gebildet wird. Von einer zur Kreisbahn senkrechten Ausrichtung weicht die Ausrichtung des Anschlagabschnitts vorzugsweise um höchstens 10° ab.

Ein derartiger Steg mit zwei parallelen Seitenflächen lässt sich vergleichsweise einfach und kostengünstig durch Kaltumformung ausbilden. Insbesondere kann in einem Abschnitt der Längserstreckung des Drehbügels (bzw. des Materials, aus dem der Drehbügel geformt wird), dessen (des Abschnitts) Länge der Länge des auszubildenden Stegs entspricht, ein äußerer Teilbereich des Abschnitts beispielsweise zwischen einem Stempel und einem Auflager aus entgegengesetzten Richtungen so gepresst werden, dass das Material dieses Teilbereichs zu einem senkrecht zu diesen Richtungen zumindest teilweise nach außen vorstehenden Steg umgeformt wird. Die beiden Seitenflächen des Stegs sind dadurch senkrecht zu den beiden entgegengesetzten Richtungen ausgerichtet, aus denen der Teilbereich gepresst wird.

Wenn der Drehbügel einen Steg mit den genannten zwei Seitenflächen aufweist, kann gemäß einer vorteilhaften Ausführungsform vorgesehen sein, dass ein Übergang zwischen der Stirnseite, durch die der Anschlagabschnitt gebildet wird, und einer Außenseite des Stegs, welche die beiden Seitenflächen verbindet und von dem Drehbügel weg weisend ausgerichtet ist, einen Krümmungsradius von höchstens 1 mm, vorzugsweise höchstens 0,5 mm, insbesondere höchstens 0,3 mm, und/oder höchstens 1,5 %, vorzugsweise höchstens 1 %, insbesondere höchstens 0,5 %, des Radius der Kreisbahn aufweist. Bei der Außenseite kann es sich um eine der genannten Randseiten des Stegs handeln. Aufgrund der von dem Drehbügel wegweisenden Ausrichtung der Außenseite können die den Anschlagabschnitt bildende Stirnseite und die Außenseite insbesondere zumindest im Wesentlichen senkrecht zueinander ausgerichtet sein.

Gemäß einer weiteren vorteilhaften Ausführungsform erstrecken sich die Seitenflächen des Stegs relativ zu einem entlang der Kreisbahn an den Steg angrenzenden Abschnitt des Drehbügels, vorzugsweise relativ zu beidseitig entlang der Kreisbahn an den Steg angrenzenden Abschnitten des Drehbügels, sowohl weiter aus dem Drehbügel heraus als auch weiter in den Drehbügel hinein, insbesondere relativ zu einer in die Richtung des Vorstehens des Steges nach außen weisenden, entlang der Kreisbahn verlaufenden Oberfläche des jeweiligen Abschnitts. Auf diese Weise können die Stege nicht nur von dem Drehbügel vorstehen, sondern zumindest teilweise auch in diesen hineinragen und somit besonders stabil am Drehbügel verankert sein.

Gemäß einer weiteren vorteilhaften Ausführungsform grenzt an beide Seitenflächen des Stegs jeweils eine in dem Drehbügel ausgebildete Ausnehmung an. Die Ausnehmungen können insbesondere jeweils als eine konkave Struktur in dem Drehbügel ausgebildet sein. Ferner können die Ausnehmungen senkrecht zur jeweiligen Seitenfläche an diese angrenzen. Dabei kann ein Teil der jeweiligen Seitenfläche, nämlich insbesondere ein sich wie vorstehend erläutert in den Drehbügel hineinerstreckender Teil der jeweiligen Seitenfläche, eine Wand der jeweiligen Ausnehmung bilden.

Beide Ausnehmungen weisen bezüglich einer zu den Seitenflächen senkrechten Richtung vorzugsweise einen, insbesondere denselben, konstanten Querschnitt auf. Die beiden Ausnehmungen können auch als eine einzelne Ausnehmung mit konstantem Querschnitt betrachtet werden, die durch den Steg zweigeteilt, insbesondere gerade halbiert, wird. Die Ausnehmungen können ergänzend zu den Stegen zu einem Verriegeln des Drehbügels beitragen. Dazu kann vorgesehen sein, dass der Riegel nicht nur die Anschlagfläche des Stegs hintergreift, sondern auch in zumindest eine der beiden Ausnehmungen, vorzugsweise in beide, eingreift, wenn sich der Drehbügel in seiner Geschlossenstellung befindet und sich der Riegel in seiner Verriegelungsstellung befindet. Der Riegel greift dabei vorzugsweise derart in eine jeweilige Ausnehmung ein, dass dadurch ein Verstellen des Drehbügels entlang der Kreisbahn in zumindest eine Richtung gesperrt wird.

Gemäß einer weiteren vorteilhaften Ausführungsform kann der Steg in eine zur Ebene der Kreisbahn senkrechte Richtung von dem Drehbügel vorstehen. Der Steg steht dann also axial, d. h. parallel zur durch den Mittelpunkt der Kreisbahn verlaufenden und senkrecht zur Ebene der Kreisbahn ausgerichteten Drehachse, von dem Drehbügel vor. Bezüglich eines Mittelpunkts des Querschnitts des Drehbügels ist der Steg dagegen (wie bereits erwähnt) vorzugsweise radial nach außen vorstehend ausgerichtet.

Das Material, aus dem der Drehbügel gebildet ist, kann Hauptfasern aufweisen, die in einem bezüglich einer zur Kreisbahn senkrechten Richtung mittleren Bereich des Drehbügels verlaufen und für die Stabilität des Drehbügels wichtig sind. Dadurch dass der Steg bezüglich der Kreisbahn in axiale Richtung vorstehend ausgebildet wird, kann vermieden werden, dass diese Hauptfasern durch die Ausbildung des Stegs beeinträchtigt, insbesondere unterbrochen, werden. Die Stabilität des Drehbügels bleibt somit trotz der Bearbeitung des Drehbügels zur Ausbildung des Steges im Wesentlichen vollständig erhalten. Eine solche axiale Ausrichtung des Stegs ist insbesondere zweckmäßig, wenn die Sperrstruktur des Drehbügel zumindest ein Paar zweier an derselben Position entlang der Kreisbahn angeordneter und in entgegengesetzte Richtungen von dem Drehbügel vorstehender Stege umfasst (wie weiter unten noch erläutert wird), die dann vorzugsweise axial entgegengesetzt zueinander von dem Drehbügel vorstehen.

Zur begrifflichen Unterscheidung gegebenenfalls vorgesehener weitere von dem Drehbügel vorstehender Stege kann der genannte eine von dem Drehbügel vorstehende Steg, dessen Anschlagabschnitt von dem Riegel hintergriffen wird, wenn sich der Drehbügel in seiner Geschlossenstellung befindet und sich der Riegel in seiner Verriegelungsstellung befindet, auch als erster Steg bezeichnet werden, ohne dass diese Bezeichnung als Hinweis auf eine bestimmte Mindest-, Höchst- oder Gesamtanzahl oder auf eine bestimmte Rangfolge oder räumliche Abfolge der gegebenenfalls mehreren von dem Drehbügel vorstehenden Stege zu verstehen ist.

Gemäß einer weiteren vorteilhaften Ausführungsform umfasst die Sperrstruktur mehrere von dem Drehbügel vorstehende Stege, die jeweils einen Anschlagabschnitt aufweisen und auch im Übrigen insbesondere entsprechend einer der für den ersten Steg beschriebenen Weisen ausgebildet sein können, wobei der Riegel, wenn sich der Drehbügel in einer bestimmten Stellung befindet und sich der Riegel in seiner Verriegelungsstellung befindet, den Anschlagabschnitt eines jeweiligen der Stege hintergreift und den Drehbügel dadurch gegen ein Verstellen aus der bestimmten Stellung, jedenfalls in eine jeweilige der zwei entgegengesetzten Verstellrichtungen entlang der Kreisbahn, sperrt. Der Riegel hintergreift den jeweiligen Anschlagabschnitt dabei insbesondere bezüglich der zu sperrenden Verstellrichtung.

Bei der bestimmten Stellung kann es sich für einen oder mehrere der Stege um die Geschlossenstellung handeln. Beispielsweise kann in der Geschlossenstellung des Drehbügels nicht nur der Anschlagabschnitt des ersten Stegs von dem Riegel in seiner Verriegelungsstellung hintergriffen werden, sondern auch der (jeweilige) Anschlagabschnitt eines oder mehrerer weiterer der mehreren von dem Drehbügel vorstehenden Stege. Auf diese Weise kann die Geschlossenstellung besonders zuverlässig mittels mehrerer von dem Drehbügel vorstehender Stege gesichert werden.

Bei der bestimmten Stellung kann es sich für einen oder mehrere der von dem Drehbügel vorstehenden Stege aber auch um eine andere Stellung des Drehbügels als die Geschlossenstellung handeln. Auf diese Weise kann der Drehbügel nicht nur in seiner Geschlossenstellung gegen ein Verstellen (in zumindest eine Richtung entlang der Kreisbahn) mittels des Riegels gesperrt werden, sondern auch in einer oder mehreren weiteren Stellungen, insbesondere auch in seiner Offenstellung.

Gemäß einer vorteilhaften Ausführungsform kann die Sperrstruktur einen weiteren von dem Drehbügel vorstehenden Steg umfassen, der einen Anschlagabschnitt aufweist und auch im Übrigen insbesondere entsprechend einer der für den ersten Steg beschriebenen Weisen ausgebildet sein kann, wobei der Riegel, wenn sich der Drehbügel in seiner Offenstellung befindet und sich der Riegel in seiner Verriegelungsstellung befindet, den Anschlagabschnitt dieses weiteren Stegs (bezüglich der zu sperrenden Verstellrichtung) hintergreift und den Drehbügel dadurch gegen ein Verstellen aus der Offenstellung sperrt. Der Drehbügel ist dann insbesondere zumindest gegen ein Erreichen der Geschlossenstellung gesperrt, vorzugsweise aber bereits gegen ein Verlassen der Offenstellung in Richtung der Geschlossenstellung.

Bei diesem weiteren Steg kann es sich um einen der vorstehend genannten mehreren von dem Drehbügel vorstehenden Stege handeln. Zur begrifflichen Unterscheidung kann dieser weitere Steg auch als zweiter Steg bezeichnet werden, ohne dass diese Bezeichnung als Hinweis auf eine bestimmte Mindest-, Höchst- oder Gesamtanzahl oder auf eine bestimmte Rangfolge oder räumliche Abfolge der gegebenenfalls mehreren von dem Drehbügel vorstehenden Stege zu verstehen ist.

Bei einer solchen Ausführungsform kann also mittels desselben Riegels, der den Drehbügel in der Geschlossenstellung sperrt, der Drehbügel auch gegen ein Verstellen aus der Offenstellung gesperrt werden. Das kann zweckmäßig sein, um sicherzustellen, dass der Drehbügel nicht versehentlich, insbesondere nicht während einer Fahrt mit dem Zweirad, in Schließrichtung verstellt werden und somit in das Rad eingreifen kann.

Gemäß einer weiteren vorteilhaften Ausführungsform kann die Sperrstruktur einen weiteren von dem Drehbügel vorstehenden Steg umfassen, der einen Anschlagabschnitt aufweist und auch im Übrigen insbesondere entsprechend einer der für den ersten Steg beschriebenen Weisen ausgebildet sein kann, wobei der Riegel, wenn sich der Drehbügel in seiner Geschlossenstellung befindet und sich der Riegel in seiner Verriegelungsstellung befindet, den Anschlagabschnitt dieses weiteren Stegs (bezüglich der zu sperrenden Verstellrichtung) hintergreift und den Drehbügel dadurch gegen ein Verstellen aus der Geschlossenstellung in Richtung von der Offenstellung weg, also in die Schließrichtung über die Geschlossenstellung hinaus, sperrt. Insbesondere kann der Drehbügel dabei bereits gegen ein Verlassen der Geschlossenstellung in diese Richtung gesperrt werden.

Bei diesem weiteren Steg kann es sich um einen der vorstehend genannten mehreren von dem Drehbügel vorstehenden Stege handeln. Zur begrifflichen Unterscheidung kann dieser weitere Steg auch als dritter Steg bezeichnet werden, ohne dass diese Bezeichnung als Hinweis auf eine bestimmte Mindest-, Höchst- oder Gesamtanzahl oder auf eine bestimmte Rangfolge oder räumliche Abfolge der gegebenenfalls mehreren von dem Drehbügel vorstehenden Stege zu verstehen ist. Insbesondere setzt das Vorhandensein des dritten Stegs nicht das Vorhandensein des genannten zweiten Stegs voraus.

Bei einer solchen Ausführungsform kann der Drehbügel also in seiner Geschlossenstellung nicht nur gegen ein Verstellen in die Öffnungsrichtung, sondern auch gegen ein Verstellen in die Schließrichtung gesichert sein. Eine solche zusätzliche Sicherung kann zweckmäßig sein, um sicherzustellen, dass der Drehbügel nicht gewaltsam in Schließrichtung aus dem Schlosskörper herausgerissen werden kann.

Gemäß einer weiteren vorteilhaften Ausführungsform können bei einer Sperrstruktur mit mehreren von dem Drehbügel vorstehenden Stegen zumindest zwei der Stege dieselbe Position entlang der Kreisbahn aufweisen und in entgegengesetzte Richtungen, insbesondere bezüglich eines Mittelpunkts des Querschnitts des Drehbügels diametral zueinander, von dem Drehbügel vorstehen, wobei der Riegel derart ausgebildet ist, dass er, wenn sich der Drehbügel in der jeweiligen zu sperrenden Stellung befindet und sich der Riegel in seiner Verriegelungsstellung befindet, sowohl den Anschlagabschnitt des einen der Stege als auch den Anschlagabschnitt des anderen der Stege hintergreift.

Dass diese zwei Stege dieselbe Position aufweisen, meint, dass sie entlang der Kreisbahn zumindest bereichsweise an derselben Position angeordnet sind. Insbesondere können ihre beiden Anschlagabschnitte dieselbe Position entlang der Kreisbahn aufweisen. Vorzugsweise liegen ihre Anschlagabschnitte in einer Ebene.

Bei der jeweiligen zu sperrenden Stellung kann es sich insbesondere um die vorstehend genannte bestimmte Stellung des Drehbügels handeln, in welcher der Drehbügel durch das Hintergreifen des Anschlagabschnitts eines jeweiligen der zwei Stege gegen ein Verstellen aus dieser Stellung gesperrt wird und bei der es sich insbesondere um die Geschlossenstellung oder die Offenstellung des Drehbügels handeln kann.

Damit der Riegel mit den Anschlagabschnitten der zwei in entgegengesetzte Richtungen von dem Drehbügel vorstehenden Stege zusammenwirken kann, kann der Riegel insbesondere gabelförmig mit einer halbkreisförmig den Drehbügel umgreifenden Kontur ausgebildet sein, die in zwei Arme mündet, welche in der Verriegelungsstellung des Riegels den Anschlagabschnitt eines jeweiligen der beiden Stege hintergreifen.

Die Sperrstruktur kann ein oder mehrere solcher Paare von Stegen umfassen, deren zwei Stege jeweils dieselbe Position entlang der Kreisbahn aufweisen und in entgegengesetzte Richtungen von dem Drehbügel vorstehen. Insbesondere kann vorgesehen sein, dass die Sperrstruktur zu jedem der von dem Drehbügel vorstehenden Stege einen Steg umfasst, der bezüglich des jeweiligen Stegs an derselben Position entlang der Kreisbahn angeordnet ist und in entgegengesetzte Richtung von dem Drehbügel vorsteht.

Gemäß einer weiteren vorteilhaften Ausführungsform stehen bei einer Sperrstruktur mit mehreren von dem Drehbügel vorstehenden Stegen zumindest zwei der Stege in dieselbe Richtung von dem Drehbügel vor, wobei an dem Drehbügel eine Leiste, insbesondere aus Kunststoff, angeordnet ist, die entlang der Kreisbahn von dem einen der zwei Stege bis zu dem anderen der zwei Stege an einer in diese Richtung weisenden Außenseite des Drehbügels anliegt. Mit anderen Worten erstreckt sich die Leiste längs der Kreisbahn zumindest von dem einem zu dem anderen Steg und liegt dabei an der genannten Außenseite des Drehbügels an. Vorzugsweise weist die Leiste dabei einen unmittelbaren Kontakt zu der Außenseite des Drehbügels auf. Grundsätzlich kann aber zumindest bereichsweise auch ein gewisser Spalt verbleiben. Ferner ist es bevorzugt, dass sich die Leiste oder zumindest ein Abschnitt der Leiste entlang einer Außenkontur des Drehbügels erstreckt, welche die genannten zwei Stege dem Verlauf der Kreisbahn folgend, insbesondere in direkter Linie, verbindet. An der Leiste kann auch eine Handhabe für ein manuelles Verstellen des Drehbügels vorgesehen sein, wie nachstehend noch erläutert wird, und/oder die Leiste kann mit einem Ende des Drehbügels gekoppelt sein. Die Leiste kann somit auch als Verbinder oder als Abdeckung bezeichnet werden.

Die Leiste ist von dem Drehbügel separat ausgebildet und vorzugsweise aus Kunststoff. Insbesondere kann die Leiste als formstabiles und/oder elastisches Teil ausgebildet sein. Der Form des Drehbügels entsprechend kann der Umriss der Leiste eine Kreisbogenform aufweisen.

Bei den zwei Stegen kann es sich insbesondere um den vorstehend genannten ersten Steg und den vorstehend genannten zweiten Steg handeln.

Die Leiste kann sich entlang der Kreisbahn über einen oder über beide Stege hinaus erstrecken. Insbesondere kann sich die Leiste zumindest im Wesentlichen über denjenigen Teil der Längserstreckung des Drehbügels erstrecken, der in der Offenstellung des Drehbügels in einem Gehäuse des Schlosskörpers aufgenommen ist. Vorzugsweise erstreckt sich die Leiste in der Geschlossenstellung des Drehbügels nicht aus dem Gehäuse heraus. Längs der Kreisbahn kann sich die Leiste beispielsweise über mindestens 120° und/oder höchstens 150°, insbesondere über etwa 135° erstrecken.

Dass die Leiste an der Außenseite anliegt, schließt nicht aus, dass sie noch an weiteren Bereichen des Drehbügels anliegt oder zumindest angeordnet ist. Insbesondere kann die Leiste den Drehbügel in Umfangsrichtung um seine Längserstreckung zumindest abschnittsweise von drei Seiten bzw. über einen Winkel von mehr als 180°, vorzugsweise mehr als 210°, insbesondere mehr als 240°, umgreifen.

Die zwei Stege können beispielsweise bezüglich des Mittelpunkts der Kreisbahn beide radial nach innen, beide radial nach außen oder beide in dieselbe axiale, d.h. zur Ebene der Kreisbahn senkrechte, Richtung von dem Drehbügel vorstehen. Bei der Außenseite des Drehbügels, an welcher die Leiste anliegt, kann es sich dementsprechend um eine radial nach innen, radial nach außen bzw. in axiale Richtung weisende Außenseite handeln, die einem kreisbogenförmig verlaufenden streifenförmigen Bereich einer Oberfläche des Drehbügels entsprechen kann.

Dadurch, dass sich die Leiste längs der Kreisbahn von dem einen Steg bis zu dem anderen Steg erstreckt, verbreitert die Leiste den Drehbügel (zumindest in dem Bereich zwischen den beiden Stegen) in die Richtung, in welche die beiden Stege von dem Drehbügel vorstehen. Vorzugsweise verbreitert die Leiste den Drehbügel dabei zumindest um dasselbe Maß, um das die Stege von dem Drehbügel vorstehen, so dass die Leiste den Bereich zwischen den zwei Stegen sozusagen auffüllt. Das kann vorteilhafterweise dazu beitragen, den Drehbügel zuverlässig, insbesondere möglichst spielfrei, in einer Drehbügelaufnahme des Schlosskörpers, in welcher der Drehbügel zumindest teilweise aufgenommen und verstellbar gelagert ist, zu führen. Insbesondere wenn die Leiste den Drehbügel über das Maß, um das die Stege von dem Drehbügel vorstehen, hinaus verbreitert, kann der Drehbügel mit der Leiste an einer oder mehreren Innenwänden der Drehbügelaufnahme entlanggleiten und dadurch besonders zuverlässig geführt werden. Eine zumindest weitgehend spielfreie Führung des Drehbügels in der Drehbügelaufnahme trägt auch dazu bei, Klappergeräusche zu unterbinden, die ansonsten insbesondere während einer Fahrt mit dem Zweirad auftreten könnten.

An der Leiste kann vorteilhafterweise eine Handhabe für ein manuelles Verstellen des Drehbügels oder zumindest ein Befestigungsansatz zur Befestigung einer solchen Handhabe an der Leiste vorgesehen, d.h. angeordnet oder ausgebildet, insbesondere an der Leiste angeformt, sein. Die Handhabe bzw. der Befestigungsansatz steht dabei vorzugsweise senkrecht zur Ebene der Kreisbahn von der Leiste vor. Grundsätzlich sind aber auch andere Ausrichtungen denkbar. Insbesondere kann die Handhabe bzw. der Befestigungsansatz auch bezüglich des Mittelpunkts der Kreisbahn radial nach außen von der Leiste vorstehen.

Die Handhabe an der Leiste vorzusehen, anstatt sie unmittelbar an dem Drehbügel auszubilden oder zu befestigen, trägt weiter dazu bei, dass die Materialstruktur des Drehbügels nicht beeinträchtigt wird. Insbesondere braucht die Handhabe bzw. der Befestigungsansatz für die Handhabe somit nicht an den Drehbügel angeschweißt zu werden.

Gemäß einer vorteilhaften Ausführungsform weist die Leiste eine Seitenfläche auf, welche sowohl mit einer Seitenfläche, insbesondere einer der genannten Seitenflächen, des einen der zwei Stege als auch mit einer Seitenfläche, insbesondere einer der genannten Seitenflächen, des anderen der zwei Stege zumindest im Wesentlichen fluchtet. Die Seitenfläche der Leiste kann die Leiste dabei, zumindest in dem Bereich zwischen den zwei Stegen, in eine Umfangsrichtung um die Längserstreckung des Drehbügels herum begrenzen.

Aufgrund des genannten Fluchtens können die drei Seitenflächen der beiden Stege sowie der Leiste, gegebenenfalls von einem jeweiligen Spalt an den beiden Übergängen abgesehen, eine kontinuierliche Bahn bilden. Dabei können die drei Seitenflächen insbesondere in einer Ebene liegen oder eine entsprechend dem Verlauf der Kreisbahn gebogene Bahn bilden.

Insbesondere können die Seitenflächen dabei in die Richtung weisen, die einem Verstellen des Riegels aus seiner Verriegelungsstellung in seine Entriegelungsstellung entspricht. Der Riegel kann in die Gegenrichtung, also aus der Entriegelungsstellung in seine Verriegelungsstellung, vorgespannt sein und, nachdem der Riegel zum Lösen einer gesperrten Stellung des Drehbügels in seine Entriegelungsstellung versetzt worden ist, gegen die durch die Seitenflächen gebildete Bahn vorgespannt an ihr entlanggleiten, während der Drehbügel verstellt wird. Auf diese Weise kann der Riegel während eines Verstellens des Drehbügels mithilfe der Leiste in seiner Entriegelungsstellung oder jedenfalls einer den Drehbügel nicht sperrenden Stellung gehalten werden.

Gemäß einer weiteren vorteilhaften Ausführungsform ist die Leiste formschlüssig, insbesondere einrastend, an dem Drehbügel befestigt. Die Leiste kann dabei einen Formschluss mit zumindest einem der gegebenenfalls mehreren von dem Drehbügel vorstehenden Stege eingehen. Insbesondere kann die Leiste zwischen den zwei Stegen, zwischen denen sie sich zumindest erstreckt, derart gefangen sein, dass sie relativ zu dem Drehbügel entlang der Kreisbahn eindeutig festgelegt ist, also entlang der Kreisbahn nicht relativ zu dem Drehbügel (sondern nur gemeinsam mit diesem) versetzt werden kann. Vorzugsweise ist die Leiste in jegliche Raumrichtung formschlüssig an dem Drehbügel befestigt.

Im Folgenden wird die Erfindung lediglich beispielhaft anhand der Figuren weiter erläutert.
- Fig. 1: zeigt eine Ausführungsform eines erfindungsgemäßen Rahmenschlosses.
- Fig. 2: zeigt den Drehbügel des Rahmenschlosses.
- Fig. 3: zeigt ein Detail des Drehbügels.
- Fig. 4: zeigt den Drehbügel des Rahmenschlosses zusammen mit einer daran angeordneten Leiste.
- Fig. 5: zeigt ein Detail des Drehbügels mit der Leiste.
- Fig. 6 und 7: zeigen ein Detail des Drehbügels mit der Leiste im Zusammenwirken mit dem Riegel des Rahmenschlosses in zwei unterschiedlichen Stellungen des Drehbügels und des Riegels.

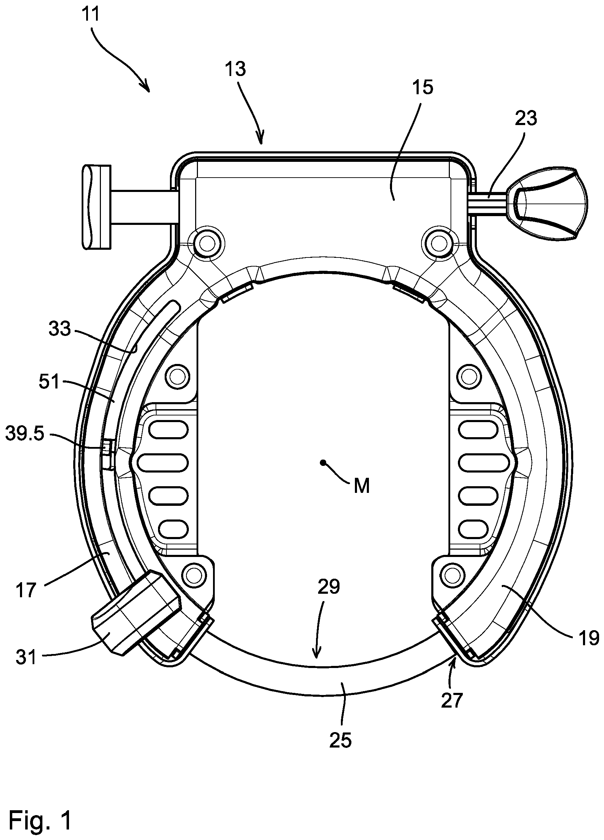

In Fig. 1 ist eine Ausführungsform eines erfindungsgemäßen Rahmenschlosses 11 dargestellt. Das Rahmenschloss 11 umfasst einen Schlosskörper 13 mit einem Gehäuse 15, das zumindest im Wesentlichen C-förmig ausgebildet ist, wobei ein mittlerer Abschnitt der C-Form quaderförmig verbreitert ist und die beiden übrigen Abschnitte einen ersten Schenkel 17 und einen zweiten Schenkel 19 des Schlosskörpers 13 bilden, die sich aus Ecken der Quaderform heraus erstrecken.

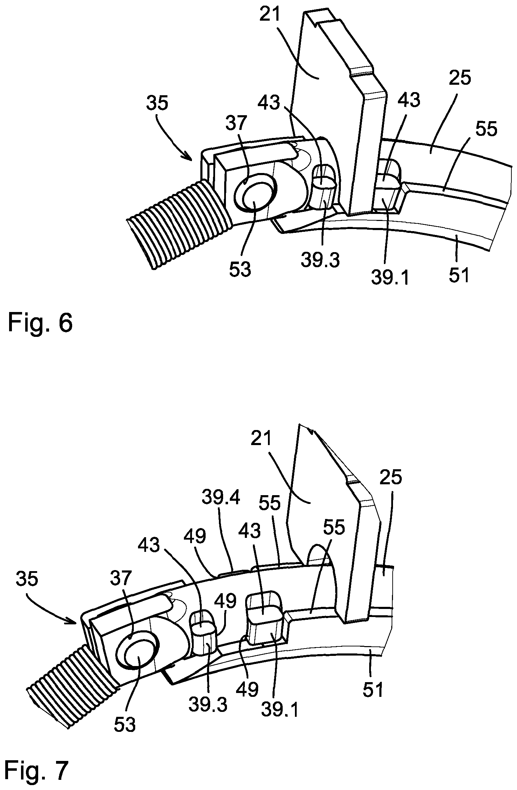

In dem mittleren Abschnitt sind eine nicht sichtbare Schließeinrichtung in Form eines Schließzylinders sowie ein mit der Schließeinrichtung gekoppelter Riegel 21 (vgl. Fig. 6 und 7) aufgenommen. Die Schließeinrichtung lässt sich nur mittels eines der Schließeinrichtung zugeordneten Schlüssels 23 regulär betätigen. Der Riegel 21 ist dabei derart mit der Schließeinrichtung gekoppelt, dass er durch eine Betätigung der Schließeinrichtung mittels des Schlüssels 23 zwischen einer Entriegelungsstellung und einer Verriegelungsstellung verstellbar ist. Insbesondere besteht dabei ein eindeutiger Zusammenhang zwischen der jeweiligen Stellung des Riegels 21 und der jeweiligen Drehstellung des Schlüssels 23.

Das Rahmenschloss 11 weist ferner einen Drehbügel 25 auf, der sich längs einer Kreisbahn erstreckt und zumindest teilweise in dem Gehäuse 15, nämlich in einer Drehbügelaufnahme, die sich durch den ersten Schenkel 17 sowie in den quaderförmigen mittleren Abschnitt des Schlosskörpers 13 erstreckt, aufgenommen ist. Der Drehbügel 25 ist dabei relativ zu dem Schlosskörper 13 derart gelagert, dass er entlang seiner Längserstreckung, also entlang der genannten Kreisbahn, zwischen einer Offenstellung und einer Geschlossenstellung verstellbar ist. Der Drehbügel 25 weist abschnittsweise einen konstanten Querschnitt auf, der in dem dargestellten Beispiel kreisrund ist, grundsätzlich aber auch eine andere Form, beispielsweise die eines regelmäßigen Vielecks, aufweisen könnte. Die Abschnitte, die den konstanten Querschnitt aufweisen, bilden dabei gemeinsam einen (weit) überwiegen Teil, beispielsweise über 80%, insbesondere über 90%, der Längserstreckung des Drehbügels 25.

In der Geschlossenstellung ragt der Drehbügel 25 mit einem freien Ende 27 aus dem ersten Schenkel 17 heraus und erstreckt sich bis zum zweiten Schenkel 19 und mit dem freien Ende 27 in diesen hinein, so dass er die beiden Schenkel 17, 19 verbindet und der Schlosskörper 13 und der Drehbügel 25 dadurch einen geschlossenen Ring bilden. Auf diese Weise kann der Drehbügel 25 bei entsprechender Anordnung des Rahmenschlosses 11 an dem Rahmen eines Zweirads (nicht dargestellt) ein Rad des Zweirads zwischen dessen Speichen durchgreifen und das Rad somit gegen Drehung sperren. Der Abschnitt des Drehbügels 25, der in der Geschlossenstellung außerhalb des Gehäuses 15 angeordnet ist, bildet einen Blockierabschnitt 29 des Drehbügels 25, der durchgehend den genannten kreisrunden Querschnitt aufweist. Der Blockierabschnitt 29 erstreckt sich entlang der genannten Kreisbahn über einen Winkelbereich von etwa 60°.

In der Offenstellung dagegen ist der Drehbügel 25 vollständig innerhalb des Gehäuses 15 aufgenommen oder ragt nur geringfügig mit dem freien Ende 27 aus dem ersten Schenkel 17 des Gehäuses 15 heraus, so dass zwischen den beiden Schenkeln 17, 19 ein Freiraum verbleibt, innerhalb dessen die Speichen des Rades zwischen den Schenkeln 17, 19 des Rahmenschlosses 11 hindurch bewegt werden können. Somit gibt der Drehbügel 25 in seiner Offenstellung das Rad des Zweirads für eine Drehung frei.

Sofern der Drehbügel 25 nicht durch den Riegel 21 dagegen gesperrt ist, verstellt zu werden, kann der Drehbügel 25 manuell mittels einer Handhabe 31 aus der Offenstellung in die Geschlossenstellung und umgekehrt aus der Geschlossenstellung zurück in die Offenstellung entlang der Kreisbahn verschoben werden, was einer Drehung des Drehbügels 25 um den Mittelpunkt M der Kreisbahn entspricht. Die Handhabe 31 ist dazu mit dem Drehbügel 25 gekoppelt und erstreckt sich senkrecht zur Ebene der genannten Kreisbahn, entlang welcher sich der Drehbügel 25 erstreckt, durch einen in dem ersten Schenkel 17 ausgebildeten Schlitz 33 hindurch. Der Schlitz 33 weist dabei einen kreisbogenförmigen Verlauf auf, wobei die Kreisbogenform des Schlitzes 33 dem Verlauf der Kreisbahn entspricht, insbesondere koaxial zur Kreisbahn ist, also denselben Mittelpunkt M aufweist.

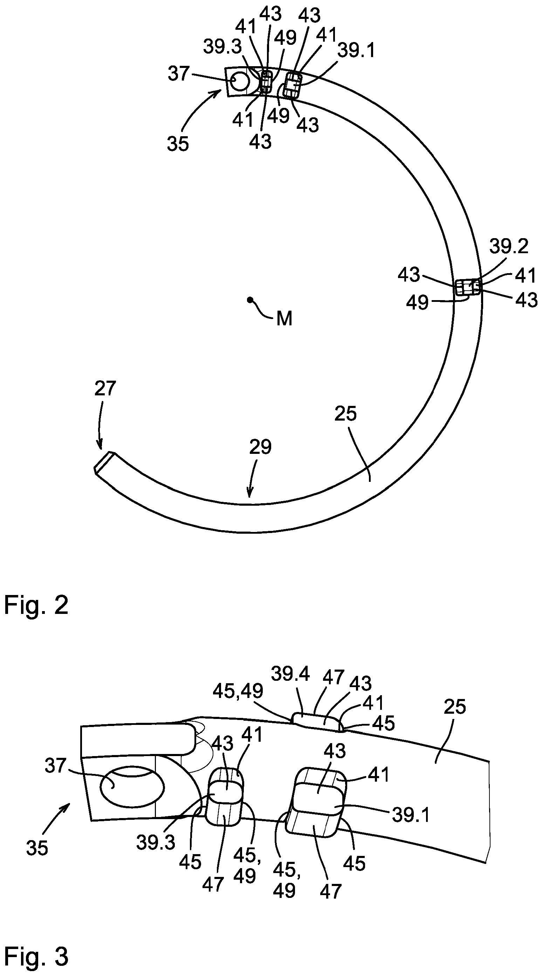

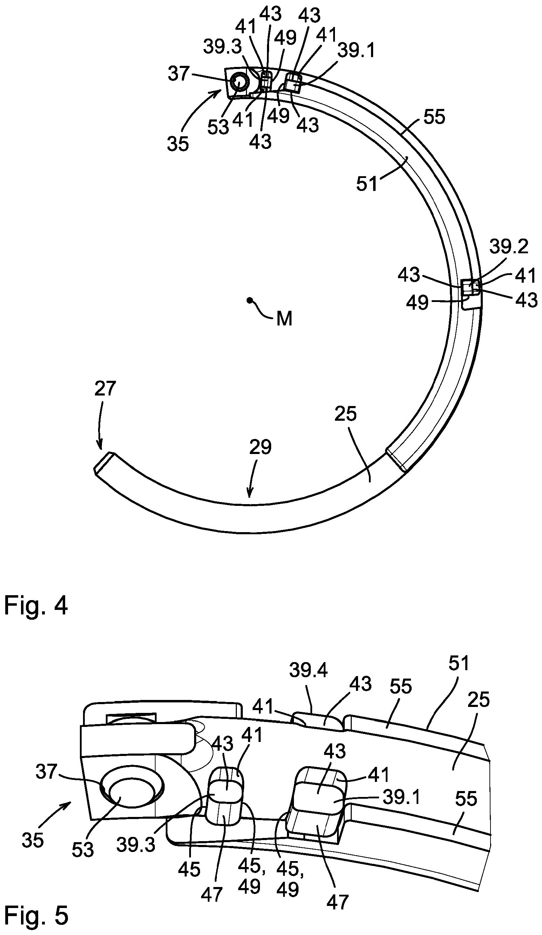

Die Fig. 1 zeigt das Rahmenschloss 11 in einer Ansicht von der Seite, senkrecht zu der Kreisbahn, entlang welcher sich der Drehbügel 25 des Rahmenschlosses 11 erstreckt. In den Fig. 2 und 4 ist die Blickrichtung gerade entgegengesetzt.

In Fig. 2 ist der Drehbügel 25 des Rahmenschlosses 11 separat dargestellt. Dabei ist zu erkennen, dass das freie Ende 27 des Drehbügels 25 eine konische Abfasung aufweist. Mit seinem dazu entgegengesetzten Ende ist der Drehbügel 25 an dem Schlosskörper 13 befestigt. Insofern bildet dieses Ende ein gekoppeltes Ende 35 des Drehbügels 25. An dem gekoppelten Ende 35 ist der Drehbügel 25 beidseitig senkrecht zur Ebene der Kreisbahn abgeflacht und weist, unter anderem zur Kopplung mit dem Schlosskörper 13, ein sich senkrecht zur Ebene der Kreisbahn durch den Drehbügel 25 hindurch erstreckendes Loch 37 auf.

Um von dem Riegel 21 gegen ein Verstellen zwischen der Offenstellung und der Geschlossenstellung gesperrt werden zu können, weist der Drehbügel 25 eine Sperrstruktur auf, die mehrere Stege 39 umfasst. Jeder dieser Stege 39 steht senkrecht zur Ebene der Kreisbahn von dem Drehbügel 25 zumindest teilweise vor. Insbesondere stehen die Stege 39 dabei jeweils über den genannten kreisrunden Querschnitt vor, den insbesondere entlang der Kreisbahn an den jeweiligen Steg 39 angrenzende Abschnitte des Drehbügels 25 aufweisen. Die Stege 39 erstrecken sich also über eine Außenkontur dieses Querschnitts hinaus nach außen.

Die Stege 39 sind durch Kaltumformung ausgebildet. Dazu wird das Stangenmaterial, aus dem der Drehbügel 25 gebildet ist und der den genannten konstanten Querschnitt aufweist, entweder vor einem Biegen in die Kreisbogenform (also mit noch geradem Verlauf) oder aber mit bereits kreisbogenförmigem Verlauf zwischen einem Stempel und einem Auflager eingespannt und in einem Abschnitt der Längserstreckung des Stangenmaterials, dessen Länge der Länge des auszubildenden Stegs 39 entspricht, ein in die Richtung, in die der Steg 39 vorstehen soll, weisender Teilbereich des Abschnitts senkrecht zu dieser Richtung sowie senkrecht zur Längserstreckung des Stangenmaterials von dem Stempel und dem Auflager aus entgegengesetzten Richtungen gepresst, so dass zwei Ausnehmungen 41 in das Stangenmaterial eingepresst werden und das dadurch verdrängte Material zu einem zwischen den zwei Ausnehmungen 41 in die genannte Richtung von dem Stangenmaterial vorstehenden Steg 39 umgeformt wird.

Infolge dieser Ausbildung weist der jeweilige Steg 39 zwei zueinander entgegengesetzte parallele Seitenflächen 43 auf, die bezüglich des Mittelpunkts M der Kreisbahn radial nach außen bzw. nach innen weisend ausgerichtet sind und sich folglich im Wesentlichen tangential zur Kreisbahn erstrecken. Bezüglich eines Mittelpunkts des Querschnitts des Drehbügels 25 erstrecken sich die Seitenflächen 43 im Vergleich zur Oberfläche entlang der Kreisbahn an den Steg 39 angrenzender Abschnitte des Drehbügels 25 sowohl weiter aus dem Drehbügel 25 heraus als auch weiter in den Drehbügel 25 hinein, so dass der Teil der jeweiligen Seitenfläche 43, der sich in den Drehbügel 25 hineinerstreckt eine Seitenwand der an die jeweilige Seitenfläche 43 angrenzenden Ausnehmung 41 bildet.

Wie insbesondere in Fig. 3 für einige der Stege 39 zu erkennen ist, sind die beiden Seitenflächen 43 eines jeweiligen Stegs 39 durch senkrecht zu den Seitenflächen 43 und somit im Wesentlichen radial zum Mittelpunkt M der Kreisbahn ausgerichtete Randseiten verbunden, die zwei in entgegengesetzte Richtungen entlang der Kreisbahn weisende Stirnseiten 45 sowie eine senkrecht zur Ebene der Kreisbahn in die Richtung, in die der Steg 39 vom Drehbügel 25 vorsteht, weisende Außenseite 47 umfassen. Die Übergänge zwischen den Stirnseiten 45 und der Außenseite 47 sind jeweils aufgrund ihrer Ausbildung durch Kaltumformung abgerundet, weisen jedoch Seitenflächen 43 vorzugsweise einen vergleichsweise kleinen Krümmungsradius, insbesondere von höchstens 0,3 mm, auf.

Der Riegel 21 und der Drehbügel 25 sind derart relativ zueinander angeordnet, dass sich der Riegel 21 in seiner Verriegelungsstellung zumindest teilweise in der Bewegungsbahn der Stege 39 befindet, welche die Stege 39 bei einem Verstellen des Drehbügels 25 entlang der Kreisbahn ungehindert durchlaufen würden. Dadurch hintergreift der Riegel 21, wenn er sich in seiner Verriegelungsstellung befindet, je nach Richtung des Verstellens des Drehbügels 25 eine der Stirnseiten 45 des bezüglich dieser Richtung nächstliegenden Stegs 39. Wenn der Drehbügel 25 in diese Richtung verstellt wird, schlägt diese Stirnseite 45 folglich an dem Riegel 21 an, so dass der Drehbügel 25 dadurch gegen ein weiteres Verstellen in diese Richtung gesperrt wird. Insofern bildet diese Stirnseite 45 einen Anschlagabschnitt 49 der genannten Sperrstruktur des Drehbügels 25, die zumindest im Wesentlichen senkrecht zum Verlauf der Kreisbahn ausgerichtet ist. Der genannte kleine Krümmungsradius trägt dabei dazu bei, dass der Drehbügel 25 mit dem jeweiligen Anschlagabschnitt 49 nicht an dem Riegel 21 vorbeigedrängt werden kann.

In Richtung aus der Bildebene der Fig. 2 und 4 heraus stehen von dem Drehbügel 25 insgesamt drei Stege 39 vor, nämlich ein erster Steg 39.1, ein zweiter Steg 39.2 und ein dritter Steg 39.3.

Der erste Steg 39.1 ist dabei entlang der Längserstreckung des Drehbügels 25 derart angeordnet, dass der Riegel 21, wenn sich der Drehbügel 25 in seiner Geschlossenstellung befindet und der Riegel 21 in seine Verriegelungsstellung verstellt wird, neben dem ersten Steg 39.1 in dessen Bewegungsbahn eingreift. Die entlang der Kreisbahn in eine Öffnungsrichtung, in die der Drehbügel 25 grundsätzlich aus seiner Geschlossenstellung in seine Offenstellung verstellt werden kann (in Fig. 2 und 4 entspricht die Öffnungsrichtung dem Gegenuhrzeigersinn), weisende Stirnseite 45 des ersten Stegs 39.1 bildet dann einen benachbart zu dem Riegel 21 angeordneten Anschlagabschnitt 49, so dass der Drehbügel 25 durch das Zusammenwirken des Riegels 21 mit diesem Anschlagabschnitt 49 gegen ein Verlassen der Geschlossenstellung in die Öffnungsrichtung gesperrt wird.

Der zweite Steg 39.2 ist entlang der Längserstreckung des Drehbügels 25 derart angeordnet, dass der Riegel 21, wenn sich der Drehbügel 25 in seiner Offenstellung befindet und der Riegel 21 in seine Verriegelungsstellung verstellt wird, neben dem zweiten Steg 39.2 in dessen Bewegungsbahn eingreift. Die entlang der Kreisbahn in eine Schließrichtung, in die der Drehbügel 25 grundsätzlich aus seiner Offenstellung in seine Geschlossenstellung verstellt werden kann (in Fig. 2 und 4 entspricht die Schließrichtung dem Uhrzeigersinn), weisende Stirnseite 45 des zweiten Stegs 39.2 bildet dann einen benachbart zu dem Riegel 21 angeordneten Anschlagabschnitt 49, so dass der Drehbügel 25 durch das Zusammenwirken des Riegels 21 mit diesem Anschlagabschnitt 49 gegen ein Verlassen der Offenstellung in die Schließrichtung gesperrt wird.

Der dritte Steg 39.3 ist entlang der Längserstreckung des Drehbügels 25 derart angeordnet, dass der Riegel 21, wenn sich der Drehbügel 25 in seiner Geschlossenstellung befindet und der Riegel 21 in seine Verriegelungsstellung verstellt wird, neben dem dritten Steg 39.3 in dessen Bewegungsbahn eingreift. Die entlang der Kreisbahn in die Schließrichtung weisende Stirnseite 45 des dritten Stegs 39.2 bildet dann einen benachbart zu dem Riegel 21 angeordneten Anschlagabschnitt 49, so dass der Drehbügel 25 durch das Zusammenwirken des Riegels 21 mit diesem Anschlagabschnitt 49 dagegen gesperrt wird, in die Schließrichtung über die Geschlossenstellung hinaus verstellt zu werden.

In der Geschlossenstellung des Drehbügels 25 greift der Riegel 21 in seiner Verriegelungsstellung also zwischen den ersten Steg 39.1 und den dritten Steg 39.3, insbesondere zwischen die Anschlagabschnitte 49 dieser beiden Stege 39.1 und 39.3, ein (vgl. auch Fig. 6), so dass der Drehbügel 25 in beide Verstellrichtungen entlang der Kreisbahn (Öffnungsrichtung und Schließrichtung) gesperrt wird. Durch die zusätzliche Sperrung auch in Schließrichtung ist der Drehbügel 25 dagegen gesichert, in seiner Geschlossenstellung aus dem Schlosskörper 13 herausgerissen zu werden.

Der Drehbügel 25 weist noch einen vierten Steg 39.4 auf, der in den Fig. 3 und 5 zu erkennen ist und entlang der Kreisbahn dieselbe Position wie der erste Steg 39.1 aufweist, jedoch in entgegengesetzte Richtung, d. h. in den Fig. 2 und 4 senkrecht zur Bildebene in diese hinein, von dem Drehbügel 25 vorsteht. Ferner weist der Drehbügel 25 noch einen fünften Steg 39.5 auf, der entlang der Kreisbahn dieselbe Position wie der zweite Steg 39.2 aufweist, jedoch in entgegengesetzte Richtung von dem Drehbügel 25 vorsteht. Der fünfte Steg 39.5 ist in Fig. 1 durch den Schlitz 33 für die Handhabe 31 hindurch zu erkennen. Der vierte Steg 39.4 und der fünfte Steg 39.5 sind nicht nur in weitgehend (bis auf die entgegengesetzte Ausrichtung) identischer Weise wie der erste Steg 39.1 bzw. der zweite Steg 39.2 ausgebildet, sondern weisen auch dieselbe Funktion auf, nämlich im Zusammenwirken mit dem Riegel 21 den Drehbügel 25 gegen ein Verlassen der Geschlossenstellung in Öffnungsrichtung bzw. der Offenstellung in Schließrichtung zu sperren, so dass durch den vierten Steg 39.4 und den fünften Steg 39.5 die Zuverlässigkeit des Verriegelns des Drehbügels 25 in einer jeweiligen Stellung weiter verbessert ist.

Das Rahmenschloss 11 umfasst ferner eine Leiste 51 aus Kunststoff, die an dem Drehbügel 25 angeordnet ist und insbesondere in den Fig. 4 bis 7 zu erkennen ist. Die Leiste 51 greift mit einem an der Leiste 51 ausgebildeten Zapfen 53 in das Loch 37 an dem gekoppelten Ende 35 des Drehbügels 25 ein und erstreckt sich von dort über einen Großteil der Längserstreckung des Drehbügels 25, insbesondere zumindest im Wesentlichen bis an den genannten Blockierabschnitt 29. Dabei weist die Leiste 51 zumindest abschnittsweise, nämlich insbesondere in dem Abschnitt zwischen dem ersten Steg 39.1 und dem zweiten Steg 39.2, einen im Wesentlichen C-förmigen Querschnitt auf und überdeckt damit den Drehbügel 25 bezüglich der Kreisbahn sowohl radial nach innen als auch in die beiden axialen, also zur Ebene der Kreisbahn senkrechten, Richtungen.

Ein Teil der Leiste 51 liegt entlang einer Außenkontur, die sich von dem ersten Steg 39.1 mit einem der Kreisbahn entsprechenden Verlauf bis zu dem zweiten Steg 39.2 erstreckt, an der Oberfläche des Drehbügels 25 an. Die Höhe der Leiste 51 (d.h. die Erstreckung der Leiste 51 radial zu einem Mittelpunkt des Querschnitts des Drehbügels) entspricht dabei dem Maß, um das der erste Steg 39.1 und der zweite Steg 39.2 von dem Drehbügel 25 vorstehenden, so dass die Leiste 51 den Bereich zwischen den beiden Stegen 39.1 und 39.2 auffüllt. Eine Seitenfläche 55 der Leiste 51, welche die Leiste 51 in diesem Bereich in Umfangsrichtung um den Drehbügel 25 herum begrenzt, fluchtet dabei mit den beiden bezüglich des Mittelpunkts M der Kreisbahn radial nach außen weisenden Seitenflächen 43 der beiden Stege 39.1 und 39.2, so dass die drei Seitenflächen 49, 55 eine im Wesentlichen kontinuierliche Bahn bilden.

Die Leiste 51 ist (von dem Ende, an dem sie mit dem gekoppelten Ende 35 des Drehbügels 25 über den Zapfen 53 gekoppelt ist, abgesehen) bezüglich einer zur Ebene der Kreisbahn parallelen Ebene symmetrisch ausgebildet. Daher füllt die Leiste 51 mit einem in die Bildebene der Fig. 4 hinein ausgerichteten und daher in Fig. 4 nicht erkennbaren Teil auch den Bereich zwischen dem vierten Steg 39.4 und dem fünften Steg 39.5 auf und weist eine die Leiste 51 in diesem Bereich in Umfangsrichtung begrenzende Seitenfläche 55 auf, die mit den beiden bezüglich des Mittelpunkts M der Kreisbahn radial nach außen weisenden Seitenflächen 43 der beiden Stege 39.4 und 39.5 fluchtet und dadurch mit diesen eine im Wesentlichen kontinuierliche Bahn bildet (vgl. Fig. 5).

Durch die Erstreckung der Leiste 51 einerseits von dem ersten Steg 39.1 bis zum zweiten Steg 39.2 und andererseits von dem vierten Steg 39.4 bis zum fünften Steg 39.5 geht die Leiste 51 zumindest bezüglich des Verlaufs der Kreisbahn einen Formschluss mit diesen Stegen 39 ein. Zudem kann die Leiste 51 einrastend, also durch einen elastisch reversiblen Formschluss, an dem Drehbügel 25 befestigt sein und dabei zwischen den Stegen 39 gefangen sein, so dass sie sich entlang der Kreisbahn nicht relativ zu dem Drehbügel 25 bewegen kann. Auf diese Weise wird die Materialstruktur des Drehbügels 25 durch die Befestigung der Leiste 51 und der daran vorgesehenen Handhabe 31 an dem Drehbügel 25 nicht beeinträchtigt. Zur Befestigung der Handhabe 31 an der Leiste 51 weist die Leiste 51 einen integral mit der Leiste 51 ausgebildeten, nämlich an der Leiste 51 angeformten, Befestigungsansatz auf. Dieser Befestigungsansatz erstreckt sich senkrecht zur Kreisbahn und somit senkrecht zur Bildebene der Fig. 4 in die Bildebene hinein und ist daher nicht zu erkennen.

Die Fig. 6 und 7 veranschaulichen das Zusammenwirken des Riegels 21 mit dem Drehbügel 25, insbesondere mit dessen Stegen 39, und mit der Leiste 51.

In Fig. 6 ist ein Zustand gezeigt, in welchem sich der Drehbügel 25 in seiner Geschlossenstellung befindet und sich der Riegel 21 in seiner Verriegelungsstellung befindet. In diesem Zustand hintergreift der Riegel 21 sowohl den Anschlagabschnitt 49 des ersten Stegs 39.1 als auch den Anschlagabschnitt 49 des dazu entgegengesetzt ausgerichteten vierten Stegs 39.4 (vgl. Fig. 7) bezüglich eines Verstellens des Drehbügels 25 in die Öffnungsrichtung, d. h. in Richtung zur Offenstellung, und sperrt daher eine solches Verstellen. Zugleich hintergreift der Riegel 21 in diesem Zustand auch den Anschlagabschnitt 49 des dritten Stegs 39.3 (vgl. Fig. 7) bezüglich eines Verstellens in die Schließrichtung und sperrt somit auch ein solches Verstellen.

Dass der Riegel 21 gleichzeitig mit den in eine Richtung senkrecht zur Ebene der Kreisbahn von dem Drehbügel 25 vorstehenden Stegen 39.1 und 39.3 und dem in die dazu entgegengesetzte Richtung von den Drehbügel 25 vorstehenden Steg 39.4 zusammenwirken kann, wird dadurch ermöglicht, dass der Riegel 21 gabelförmig ausgebildet ist und dabei eine Kontur aufweist, die den Drehbügel 25 entsprechend seinem Querschnitt, im gezeigten Beispiel also halbkreisförmig, um greift. Dadurch weist der Riegel 21 zwei Arme auf, in welche die Kontur auf der einen Seite bzw. auf der anderen Seite mündet und die somit auf (bezüglich der Kreisbahn axial) entgegengesetzten Seiten des Drehbügels 25 mit einem oder mehreren jeweiligen Stegen 39 zusammenwirken können, insbesondere einen Anschlagabschnitt 49 des jeweiligen Stegs 39 hintergreifen können.

In Fig. 7 ist ein Zustand gezeigt, in welchem der Riegel 21 in seine Entriegelungsstellung versetzt wurde, so dass er den Drehbügel 25 für ein Verstellen entlang der Kreisbahn freigibt. Gegenüber der in Fig. 6 gezeigten Geschlossenstellung ist der Drehbügel 25 in dem in Fig. 7 gezeigten Zustand um eine gewisse Strecke in die Öffnungsrichtung verstellt, ohne aber die Öffnungsstellung bereits erreicht zu haben. Der Riegel 21 liegt dabei beidseitig des Drehbügels 25 mit den genannten Armen an den Seitenflächen 55 der Leiste 51 an, welche die Leiste 51 in Umfangsrichtung um die Längserstreckung des Drehbügels 25 herum begrenzen. Der Riegel 21 kann dadurch während des Verstellens des Drehbügels 25 entlang der Kreisbahn beidseitig an den beiden kontinuierlichen Bahnen entlanggleiten, die durch die eine Seitenfläche 55 der Leiste 51 sowie die Seitenflächen 43 des ersten Stegs 39.1 und zweiten Stegs 39.2 bzw. durch die andere Seitenfläche 55 der Leiste 51 sowie die Seitenflächen 43 des vierten Steg 39.4 und des fünften Steg 39.5 gebildet werden.

Auf diese Weise wird der Riegel 21 während eines Verstellens aus der Geschlossenstellung in die Offenstellung sowie während eines Verstellens aus der Offenstellung in die Geschlossenstellung in seiner Entriegelungsstellung gehalten und braucht somit vor Erreichen der jeweiligen Stellung nicht erneut in die Entriegelungsstellung verstellt zu werden, damit ein jeweiliger der Stege 39 an dem Riegel 21 vorbeigeführt werden kann. Wenn die Schließeinrichtung derart ausgebildet ist und derart mit dem Riegel 21 gekoppelt ist, dass der Schlüssel 23 von der Schließeinrichtung nur abgezogen werden kann, wenn sich der Riegel 21 in seiner Verriegelungsstellung befindet, wird auf diese Weise zugleich sichergestellt, dass der Schlüssel 23 nicht in einer Zwischenstellung des Drehbügels 25 zwischen seiner Offenstellung und seiner Geschlossenstellung abgezogen werden kann.

Die beschriebene exemplarische Ausführungsform zeigt somit insgesamt, dass die erfindungsgemäße Ausbildung des Drehbügels 25 mit einem Anschlagabschnitt 49, der durch Kaltumformung und/oder an einem von dem Drehbügel 25 vorstehenden Steg 39 ausgebildet ist, die Verwirklichung verschiedener vorteilhafter Funktionen erlaubt, wobei ein derartiger Drehbügel 25 einfach und kostengünstig, insbesondere auch automatisiert, herstellbar ist, dabei in seiner Materialstruktur kaum beeinträchtigt wird und daher eine besonders stabile Struktur aufweist, so dass er dazu geeignet ist, ein Zweirad besonders zuverlässig zu sichern.

### Bezugszeichen

- 11: Rahmenschloss
- 13: Schlosskörper
- 15: Gehäuse
- 17: erster Schenkel
- 19: zweiter Schenkel
- 21: Riegel
- 23: Schlüssel
- 25: Drehbügel
- 27: freies Ende
- 29: Blockierabschnitt
- 31: Handhabe
- 33: Schlitz
- 35: gekoppeltes Ende
- 37: Loch
- 39: Steg
- 41: Ausnehmung
- 43: Seitenfläche
- 45: Stirnseite
- 47: Außenseite
- 49: Anschlagabschnitt
- 51: Leiste
- 53: Zapfen
- 55: Seitenfläche
- M: Mittelpunkt der Kreisbahn

## Patentansprüche

1. Rahmenschloss (11) für ein Zweirad mit einem Schlosskörper (13), der einen Riegel (21) umfasst, und mit einem Drehbügel (25), der sich längs einer Kreisbahn erstreckt und relativ zu dem Schlosskörper (13) entlang der Kreisbahn zwischen einer Offenstellung, in welcher der Drehbügel (25) ein Rad des Zweirads für eine Drehung freigibt, und einer Geschlossenstellung, in welcher der Drehbügel (25) das Rad gegen Drehung sperrt, verstellbar ist,
wobei der Drehbügel (25) eine Sperrstruktur mit einem Anschlagabschnitt (49) aufweist,
wobei der Riegel (21) zwischen einer Entriegelungsstellung und einer Verriegelungsstellung verstellbar ist,
und wobei der Riegel (21), wenn sich der Drehbügel (25) in seiner Geschlossenstellung befindet und sich der Riegel (21) in seiner Verriegelungsstellung befindet, den Anschlagabschnitt (49) hintergreift und den Drehbügel (25) dadurch gegen ein Verstellen in die Offenstellung sperrt,
**dadurch gekennzeichnet,**
**dass** die Sperrstruktur zumindest einen von dem Drehbügel (25) vorstehenden Steg (39) umfasst, der den Anschlagabschnitt (49) aufweist.

2. Rahmenschloss nach Anspruch 1,
wobei der Anschlagabschnitt (49) durch Kaltumformung ausgebildet ist.

3. Rahmenschloss nach Anspruch 1 oder 2,
wobei der Drehbügel (25) bezüglich seiner Erstreckung längs der Kreisbahn zumindest zwei auf entgegengesetzten Seiten des Stegs (39) liegende Abschnitte ohne Steg (39) umfasst, die den gleichen konstanten, insbesondere kreisrunden, Querschnitt aufweisen,
und wobei der Steg (39) über den Querschnitt hinaus nach außen vorsteht.

4. Rahmenschloss nach einem der vorhergehenden Ansprüche,
wobei der Steg (39) zwei zueinander entgegengesetzte parallele Seitenflächen (43) aufweist, die sich zumindest im Wesentlichen längs der Kreisbahn erstrecken,
und wobei der Anschlagabschnitt (49) durch eine Stirnseite (45) des Stegs (39) gebildet wird, welche die Seitenflächen (43) verbindet und zumindest im Wesentlichen senkrecht zur Kreisbahn ausgerichtet ist.

5. Rahmenschloss nach Anspruch 4,
wobei ein Übergang zwischen der Stirnseite (45) und einer Außenseite (47) des Stegs (39), welche die beiden Seitenflächen (43) verbindet und von dem Drehbügel (25) weg weisend ausgerichtet ist, einen Krümmungsradius von höchstens 1 mm, vorzugsweise höchstens 0,5 mm, insbesondere höchstens 0,3 mm, und/oder höchstens 1,5 %, vorzugsweise höchstens 1 %, insbesondere höchstens 0,5 %, des Radius der Kreisbahn aufweist.

6. Rahmenschloss nach Anspruch 4 oder 5,
wobei sich die Seitenflächen (43) relativ zu einem entlang der Kreisbahn an den Steg (39) angrenzenden Abschnitt des Drehbügels (25) sowohl weiter aus dem Drehbügel (25) heraus als auch weiter in den Drehbügel (25) hinein erstrecken.

7. Rahmenschloss nach einem der Ansprüche 4 bis 6,
wobei an beide Seitenflächen (43) des Stegs (39) jeweils eine in dem Drehbügel (25) ausgebildete Ausnehmung (41) angrenzt.

8. Rahmenschloss nach einem der vorhergehenden Ansprüche,
wobei der Steg (39) in eine zur Ebene der Kreisbahn senkrechte Richtung von dem Drehbügel (25) vorsteht.

9. Rahmenschloss nach einem der vorhergehenden Ansprüche,
wobei die Sperrstruktur mehrere von dem Drehbügel (25) vorstehende Stege (39) umfasst, die jeweils einen Anschlagabschnitt (49) aufweisen,
und wobei der Riegel (21), wenn sich der Drehbügel (25) in einer bestimmten Stellung befindet und sich der Riegel (21) in seiner Verriegelungsstellung befindet, den Anschlagabschnitt (49) eines jeweiligen der Stege (39) hintergreift und den Drehbügel (25) dadurch gegen ein Verstellen aus der bestimmten Stellung sperrt.

10. Rahmenschloss nach einem der vorhergehenden Ansprüche,
wobei die Sperrstruktur einen weiteren von dem Drehbügel (25) vorstehenden Steg (39) umfasst, der einen Anschlagabschnitt (49) aufweist,
und wobei der Riegel (21), wenn sich der Drehbügel (25) in seiner Offenstellung befindet und sich der Riegel (21) in seiner Verriegelungsstellung befindet, den Anschlagabschnitt (49) dieses weiteren Stegs (39) hintergreift und den Drehbügel (25) dadurch gegen ein Verstellen aus der Offenstellung sperrt.

11. Rahmenschloss nach einem der vorhergehenden Ansprüche,
wobei die Sperrstruktur einen weiteren von dem Drehbügel (25) vorstehenden Steg (39) umfasst, der einen Anschlagabschnitt aufweist,
und wobei der Riegel (21), wenn sich der Drehbügel (25) in seiner Geschlossenstellung befindet und sich der Riegel (21) in seiner Verriegelungsstellung befindet, den Anschlagabschnitt (49) dieses weiteren Stegs (39) hintergreift und den Drehbügel (25) dadurch gegen ein Verstellen aus der Geschlossenstellung in Richtung von der Offenstellung weg sperrt.

12. Rahmenschloss nach einem der Ansprüche 9 bis 11,
wobei zumindest zwei der Stege (39) dieselbe Position entlang der Kreisbahn aufweisen und in entgegengesetzte Richtungen von dem Drehbügel (25) vorstehen,
und wobei der Riegel (21) derart ausgebildet ist, dass er, wenn sich der Drehbügel (25) in der jeweiligen zu sperrenden Stellung befindet und sich der Riegel (21) in seiner Verriegelungsstellung befindet, sowohl den Anschlagabschnitt (49) des einen der Stege (39) als auch den Anschlagabschnitt (49) des anderen der Stege (39) hintergreift.

13. Rahmenschloss nach einem der Ansprüche 9 bis 12,
wobei zumindest zwei der Stege (39) in dieselbe Richtung von dem Drehbügel (25) vorstehen,
und wobei an dem Drehbügel (25) eine Leiste (51), insbesondere aus Kunststoff, angeordnet ist, die entlang der Kreisbahn von dem einen der zwei Stege (39) bis zu dem anderen der zwei Stege (39) an einer in diese Richtung weisenden Außenseite des Drehbügels (25) anliegt.

14. Rahmenschloss nach Anspruch 13,
wobei die Leiste (51) eine Seitenfläche (55) aufweist, welche sowohl mit einer Seitenfläche (43) des einen der zwei Stege (39) als auch mit einer Seitenfläche (43) des anderen der zwei Stege (39) zumindest im Wesentlichen fluchtet.

15. Rahmenschloss nach Anspruch 13 oder 14,
wobei die Leiste (51) formschlüssig, insbesondere einrastend, an dem Drehbügel (25) befestigt ist.

## Claims

1. A frame lock (11) for a two-wheeler, said frame lock (11) comprising a lock body (13), which comprises a latch (21), and a rotary hoop (25) which extends along a circular path and which is adjustable relative to the lock body (13) along the circular path between an open position, in which the rotary hoop (25) releases a wheel of the two-wheeler for a rotation, and a closed position in which the rotary hoop (25) blocks the wheel against rotation,
wherein the rotary hoop (25) has a blocking structure comprising an abutment section (49),
wherein the latch (21) is adjustable between an unlocked position and a locked position,
and wherein, when the rotary hoop (25) is in its closed position and the latch (21) is in its locked position, the latch (21) engages behind the abutment section (49) and thereby blocks the rotary hoop (25) against an adjustment into the open position,
**characterized in that**
the blocking structure comprises at least one web (39) which projects from the rotary hoop (25) and which has the abutment section (49).

2. A frame lock according to claim 1,
wherein the abutment section (49) is formed by cold forming.

3. A frame lock according to claim 1 or 2,
wherein the rotary hoop (25) comprises, with respect to its extent along the circular path, at least two sections without a web (39) that are disposed at opposite sides of the web (39) and that have the same constant cross-section, in particular a circular cross-section,
and wherein the web (39) projects outwardly beyond the cross-section.

4. A frame lock according to any one of the preceding claims,
wherein the web (39) has two mutually opposite parallel side surfaces (43) which extend at least substantially along the circular path,
and wherein the abutment section (49) is formed by an end face (45) of the web (39) that connects the side surfaces (43) and that is oriented at least substantially perpendicular to the circular path.

5. A frame lock according to claim 4,
wherein a transition between the end face (45) and an outer side (47) of the web (39), which connects the two side surfaces (43) and is oriented facing away from the rotary hoop (25), has a radius of curvature of at most 1 mm,
preferably at most 0.5 mm, in particular at most 0.3 mm, and/or at most 1.5%, preferably at most 1%, in particular at most 0.5%, of the radius of the circular path.

6. A frame lock according to claim 4 or 5,
wherein the side surfaces (43) extend both further out of the rotary hoop (25) and further into the rotary hoop (25) relative to a section of the rotary hoop (25) adjoining the web (39) along the circular path.

7. A frame lock according to any one of the claims 4 to 6,
wherein a respective recess (41) formed in the rotary hoop (25) adjoins both side surfaces (43) of the web (39).

8. A frame lock according to any one of the preceding claims,
wherein the web (39) projects in a direction perpendicular to the plane of the circular path from the rotary hoop (25).

9. A frame lock according to any one of the preceding claims,
wherein the blocking structure comprises a plurality of webs (39) which project from the rotary hoop (25) and which each have an abutment section (49),
and wherein, when the rotary hoop (25) is in a specific position and the latch (21) is in its locked position, the latch (21) engages behind the abutment section (49) of a respective one of the webs (39) and thereby blocks the rotary hoop (25) against an adjustment from the specific position.

10. A frame lock according to any one of the preceding claims,
wherein the blocking structure comprises a further web (39) which projects from the rotary hoop (25) and which has an abutment section (49),
and wherein, when the rotary hoop (25) is in its open position and the latch (21) is in its locked position, the latch (21) engages behind the abutment section (49) of this further web (39) and thereby blocks the rotary hoop (25) against an adjustment from the open position.

11. A frame lock according to any one of the preceding claims,
wherein the blocking structure comprises a further web (39) which projects from the rotary hoop (25) and which has an abutment section,
and wherein, when the rotary hoop (25) is in its closed position and the latch (21) is in its locked position, the latch (21) engages behind the abutment section (49) of this further web (39) and thereby blocks the rotary hoop (25) against an adjustment from the closed position in a direction away from the open position.

12. A frame lock according to any one of the claims 9 to 11,
wherein at least two of the webs (39) have the same position along the circular path and project in opposite directions from the rotary hoop (25),
and wherein the latch (21) is configured such that, when the rotary hoop (25) is in the respective position to be blocked and the latch (21) is in its locked position, said latch (21) engages behind both the abutment section (49) of the one of the webs (39) and the abutment section (49) of the other of the webs (39).

13. A frame lock according to any one of the claims 9 to 12,
wherein at least two of the webs (39) project in the same direction from the rotary hoop (25),
and wherein a strip (51), in particular composed of plastic, is arranged at the rotary hoop (25) and, along the circular path from the one of the two webs (39) up to the other of the two webs (39), contacts an outer side of the rotary hoop (25) facing in this direction.

14. A frame lock according to claim 13,
wherein the strip (51) has a side surface (55) which is at least substantially aligned both with a side surface (43) of the one of the two webs (39) and with a side surface (43) of the other of the two webs (39).

15. A frame lock according to claim 13 or 14,
wherein the strip (51) is fastened in a form-fitting manner, in particular in a latching manner, to the rotary hoop (25).

## Revendications

1. Antivol de cadre (11) pour un deux-roues, comprenant un corps d'antivol (13) muni d'un verrou (21) et un étrier rotatif (25) qui s'étend le long d'une trajectoire circulaire et qui peut être déplacé par rapport au corps d'antivol (13) le long de la trajectoire circulaire entre une position ouverte, dans laquelle l'étrier rotatif (25) libère une roue du deux-roues pour une rotation, et une position fermée, dans laquelle l'étrier rotatif (25) bloque la roue à l'encontre d'une rotation,
dans lequel
l'étrier rotatif (25) présente une structure de blocage ayant une portion de butée (49),
le verrou (21) peut être déplacé entre une position déverrouillée et une position verrouillée,
et, lorsque l'étrier rotatif (25) se trouve dans sa position fermée et que le verrou (21) se trouve dans sa position verrouillée, le verrou (21) engage par l'arrière la portion de butée (37) et bloque ainsi l'étrier rotatif (25) à l'encontre d'un déplacement vers la position ouverte,
**caractérisé en ce que**
la structure de blocage comprend au moins une nervure (39) qui fait saillie de l'étrier rotatif (25) et qui comprend la portion de butée (49).

2. Antivol de cadre selon la revendication 1,
dans lequel la portion de butée (49) est réalisée par déformation à froid.

3. Antivol de cadre selon la revendication 1 ou 2,
dans lequel l'étrier rotatif (25) comprend, par rapport à son extension le long de la trajectoire circulaire, au moins deux portions dépourvues de nervure (39), qui sont situées sur des côtés opposés de la nervure (39) et qui présentent la même section transversale constante, en particulier circulaire,
et la nervure (39) fait saillie vers l'extérieur au-delà de la section transversale.

4. Antivol de cadre selon l'une des revendications précédentes,
dans lequel la nervure (39) présente deux faces latérales (43) parallèles opposées l'une à l'autre, qui s'étendent au moins sensiblement le long de la trajectoire circulaire,
et la portion de butée (49) est formée par une face frontale (45) de la nervure (39), qui relie les faces latérales (43) et est orientée au moins sensiblement perpendiculairement à la trajectoire circulaire.

5. Antivol de cadre selon la revendication 4,
dans lequel une transition entre la face frontale (45) et une face extérieure (47) de la nervure (39), qui relie les deux faces latérales (43) et est orientée de manière détournée de l'étrier rotatif (25), présente un rayon de courbure de 1 mm au maximum, de préférence de 0,5 mm au maximum, en particulier de 0,3 mm au maximum, et/ou de 1,5 % au maximum, de préférence de 1 % au maximum, en particulier de 0,5 % au maximum, du rayon de la trajectoire circulaire.

6. Antivol de cadre selon la revendication 4 ou 5,
dans lequel, par rapport à une portion de l'étrier rotatif (25) adjacente à la nervure (39) le long de la trajectoire circulaire, les faces latérales (43) s'étendent à la fois plus loin hors de l'étrier rotatif (25) et plus loin dans l'étrier rotatif (25).

7. Antivol de cadre selon l'une des revendications 4 à 6,
dans lequel un évidement (41) respectif formé dans l'étrier rotatif (25) est adjacent à chacune des deux faces latérales (43) de la nervure (39).

8. Antivol de cadre selon l'une des revendications précédentes,
dans lequel la nervure (39) fait saillie de l'étrier rotatif (25) dans une direction perpendiculaire au plan de la trajectoire circulaire.

9. Antivol de cadre selon l'une des revendications précédentes,
dans lequel la structure de blocage comprend plusieurs nervures (39) qui font saillie de l'étrier rotatif (25) et qui présentent chacune une portion de butée (49),
et, lorsque l'étrier rotatif (25) se trouve dans une position déterminée et que le verrou (21) se trouve dans sa position verrouillée, le verrou (21) engage par l'arrière la portion de butée (49) de chacune des nervures (39) et bloque ainsi l'étrier rotatif (25) à l'encontre d'un déplacement hors de la position déterminée.

10. Antivol de cadre selon l'une des revendications précédentes,
dans lequel la structure de blocage comprend une autre nervure (39) qui fait saillie de l'étrier rotatif (25) et qui présente une portion de butée (49),
et, lorsque l'étrier rotatif (25) se trouve dans sa position ouverte et que le verrou (21) se trouve dans sa position verrouillée, le verrou (21) engage par l'arrière la portion de butée (49) de cette autre nervure (39) et bloque ainsi l'étrier rotatif (25) à l'encontre d'un déplacement hors de la position ouverte.

11. Antivol de cadre selon l'une des revendications précédentes,
dans lequel la structure de blocage comprend une autre nervure (39) qui fait saillie de l'étrier rotatif (25) et qui présente une portion de butée,
et, lorsque l'étrier rotatif (25) se trouve dans sa position fermée et que le verrou (21) se trouve dans sa position verrouillée, le verrou (21) engage par l'arrière la portion de butée (49) de cette autre nervure (39) et bloque ainsi l'étrier rotatif (25) à l'encontre d'un déplacement hors de la position fermée en direction éloignée de la position ouverte.

12. Antivol de cadre selon l'une des revendications 9 à 11,
dans lequel au moins deux des nervures (39) ont la même position le long de la trajectoire circulaire et font saillie de l'étrier rotatif (25) dans des directions opposées,
et le verrou (21) est conçu de telle sorte que, lorsque l'étrier rotatif (25) se trouve dans la position respective à bloquer et que le verrou (21) se trouve dans sa position verrouillée, ledit verrou engage par l'arrière à la fois la portion de butée (49) de l'une des nervures (39) et la portion de butée (49) de l'autre des nervures (39).

13. Antivol de cadre selon l'une des revendications 9 à 12,
dans lequel au moins deux des nervures (39) font saillie de l'étrier rotatif (25) dans la même direction,
et une baguette (51), en particulier en matière plastique, est disposée sur l'étrier rotatif (25), qui, le long de la trajectoire circulaire allant de l'une des deux nervures (39) à l'autre des deux nervures (39), s'appuie contre une face extérieure de l'étrier rotatif (25) dirigée dans cette direction.

14. Antivol de cadre selon la revendication 13,
dans lequel la baguette (51) présente une face latérale (55) qui est au moins sensiblement alignée à la fois avec une face latérale (43) de l'une des deux nervures (39) et avec une face latérale (43) de l'autre des deux nervures (39).

15. Antivol de cadre selon la revendication 13 ou 14,
dans lequel la baguette (51) est fixée par complémentarité de formes, en particulier par encliquetage, à l'étrier rotatif (25).
